# NEW EUROPEAN PATENT SPECIFICATION

(11) **EP 2 841 710 B2**
(45) Date of publication and mention of the opposition decision: **22.12.2021**
(45) Mention of the grant of the patent: 31.10.2018
(21) Application number: 13782625.1
(22) Date of filing: 19.04.2013
(51) Int. Cl.: B22C 9/10, B22C 9/04, B22F 3/24, B22F 5/04, B33Y 10/00, B33Y 40/00, C22C 1/04, B22F 10/20

(54) **GAS TURBINE ENGINE CORE PROVIDING EXTERIOR AIRFOIL PORTION**
GASTURBINENMOTORKERN MIT EINEM ÄUSSEREN SCHAUFELBLATTTEIL
C UR DE MOTEUR À TURBINE À GAZ CRÉANT UNE PARTIE DE PROFIL AÉRODYNAMIQUE EXTÉRIEURE

(30) Priority: 24.04.2012 US 201213454245
(43) Date of publication of application: 04.03.2015
(73) Proprietor: Raytheon Technologies Corporation, Farmington, CT 06032 (US)
(72) Inventor: ZELESKY, Mark, F., Bolton, Connecticut 06043 (US); PROPHETER-HINCKLEY, Tracy A., Manchester, Connecticut 06042 (US); MONGILLO, JR., Dominic J., West Hartford, Connecticut 06107 (US); GAUTSCHI, Steven Bruce, Naugatuck, Connecticut 06770 (US); DEVORE, Matthew A., Cromwell, Connecticut 06416 (US); FISK, Benjamin T., East Granby, Connecticut 06026 (US)
(74) Representative: Dehns
(86) International application number: PCT/US2013/037318
(87) International publication number: WO 2013/163020

(56) References cited:
- EP-A1- 1 659 262
- EP-A1- 1 914 030
- EP-A2- 1 655 452
- EP-A2- 1 854 567
- EP-A2- 2 159 375
- EP-A2- 2 399 693
- WO-A1-00/00650
- WO-A1-02/27056
- FR-A1- 2 764 669
- FR-A1- 2 874 187
- US-A1- 2006 065 383
- US-A1- 2007 116 566
- US-A1- 2007 116 569
- US-A1- 2007 177 975
- US-A1- 2010 054 953
- US-A1- 2010 150 733
- Couteret A.S.: "Utilisation des Duplex dans le domaine de l'offshore Application au flexible", Journée ATTT, 04.11.2004
- ASTM - A240
- ASTM - A480
- API Recommended Practice for Flexible Pipe, 3rd Ed. March 2002
- Moore F.: "Materials for flexible riser systems: problems and solutions", Engineering Struct., October 1989, Vol 11

## Description

### BACKGROUND

This disclosure relates to a core for manufacturing an airfoil used in a gas turbine engine. The disclosure also relates to a method of manufacturing the airfoil using the core.

Typically, turbine airfoils are cast using an investment casting process, or lost wax process. A ceramic core is coated and then arranged in a mold and enveloped in wax, which provides a desired airfoil shape. The wax airfoil is subsequently coated in a ceramic slurry that is hardened into a shell. The wax is melted out of the shell, which is then filled with metal to provide the airfoil. The core provides the shape of internal cooling passages within the airfoil. The core may be removed chemically, for example.

In one common manufacturing process, the ceramic core exits the wax airfoil at its trailing edge. The area around this ceramic/wax airfoil interface is typically rough and requires post operations to grind down the excess material. The post operations are typically done by hand and, due to the curved contours of the surfaces of the airfoil, inspection of the final finished surface is difficult to quantify and qualify. As a result, the finally finished metal airfoil often includes undesired positive raised alloy material resulting in local discontinuities on the local external airfoil surface geometry. In this particular instance the positive material is coincident with the aerodynamic throat or gage area at the trailing edge slot location. Typically this area of raised material has been referred to as a "ski jump." A "ski jump" is a step or a discontinuity in the desired surface contour of the airfoil exterior surface. In order to remove the positive material that results, hand finishing operations are required. If the hand finishing is severe or overly aggressive and deep into the local wall adjacent to the trailing edge coolant ejection location, a thin wall can be formed that will adversely impact the local thermal cooling performance and structural capability of the part. Locally thin walls at the trailing edge slot ejection locations can present subsequent manufacturing challenges associated with collapsing or significantly deforming the locally thin walls due to coating processing requirements. Local positive features or steps can cause disturbances within the boundary layer flow across the external surface of the airfoil, resulting in flow separation increasing aerodynamic losses. Additionally the local positive features or steps can cause local body film and trailing edge slot film cooling to eject into the gas path without properly attaching to the airfoil adversely impacting the local thermal cooling performance.

Prior art casting cores and methods of manufacture are disclosed in EP-2159375-A2, EP-1854567-A2, EP-2399693-A2 and EP-1914030-A1.

### SUMMARY

According to one aspect of the present invention, there is provided a core as claimed in claim 1.

In a further embodiment of any of the above, the cooling passage portion includes an inner surface, and the exterior airfoil portion includes an outer surface and an exterior core surface spaced apart from one another. The inner and outer surfaces face one another to provide the space.

In a further embodiment of any of the above, the film cooling passage portion includes first and second passage portions joined to one another by a bend.

In a further embodiment of any of the above, the film cooling passage portion includes a diffusion exit.

In a further embodiment of any of the above, the cooling hole portion includes a trough.

In a further embodiment of any of the above, the exterior airfoil portion wraps about an entire perimeter of the core to provide an exterior airfoil surface.

In a further embodiment of any of the above, the exterior airfoil portion includes contoured features that are configured to provide correspondingly-shaped contoured features on an airfoil exterior surface.

According to another aspect of the present invention, there is provided a method as claimed in claim 8.

In an embodiment, the method includes depositing multiple layers of powdered metal onto one another, and joining the layers to one another with reference to CAD data relating to a particular cross-section of the core.

In a further embodiment of any of the above, the method includes coating the core with a metallic coating.

In a further embodiment of any of the above, the method includes enveloping the coated core in wax to provide a wax airfoil with the exterior airfoil portion proud of the wax airfoil.

In a further embodiment of any of the above, the method includes coating the wax airfoil in a ceramic slurry to provide a ceramic airfoil mold, and the ceramic airfoil mold is bonded to the exterior airfoil portion.

In a further embodiment of any of the above, the method includes melting the wax and filling the ceramic airfoil mold to produce an airfoil including leading and trailing edges joined by spaced apart pressure and suction sides that provide an exterior airfoil surface.

In a further embodiment of any of the above, the method includes processing the airfoil to provide desired structural characteristics.

In one exemplary embodiment, a core has a body that includes a cooling passage portion with a film cooling passage portion extending there from to a cooling hole portion. An exterior airfoil portion is connected to the film cooling hole portion and is spaced apart from the cooling passage portion to provide a space surrounding the cooling hole portion that corresponds to an exterior airfoil wall. The cooling passage portion includes an inner surface, and the exterior airfoil portion includes an outer surface and an exterior core surface spaced apart from one another. The inner and outer surfaces face one another to provide the space. The outer surface configured to provide a desired an exterior airfoil surface contour.

In a further embodiment of any of the above, the exterior airfoil portion wraps aboutan entire perimeter of the core to provide an exterior airfoil surface.

### BRIEF DESCRIPTION OF THE DRAWINGS

The disclosure can be further understood by reference to the following detailed description when considered in connection with the accompanying drawings wherein:
Figure 1 is a schematic view of a gas turbine engine incorporating the disclosed airfoil.
Figure 2A is a perspective view of the airfoil having the disclosed cooling passage.
Figure 2B is a plan view of the airfoil illustrating directional references.
Figure 3A is a perspective view of an example core.
Figure 3B is a cross-sectional view of the core shown in Figure 3A arranged in a wax mold.
Figure 3C is a cross-sectional view of another example core with an exterior airfoil portion that wraps about the entire perimeter of the core to provide an airfoil exterior surface.
Figure 4A is an enlarged cross-sectional view of the core shown in Figure 3A.
Figure 4B is a perspective view of the core shown in Figure 4A.
Figure 4C is a perspective view of an airfoil manufactured using the core shown in Figure 4B.
Figure 5A is an enlarged cross-sectional view of another example core.
Figure 5B is a perspective view of the core shown in Figure 5A.
Figure 5C is a perspective view of an airfoil manufactured using the core shown in Figure 5B.
Figure 6 is a flow chart depicting an example airfoil manufacturing process.
Figure 7 is a schematic cross-sectional view of a ceramic-coated core and enveloped in wax, which is coated in a ceramic slurry.

### DETAILED DESCRIPTION

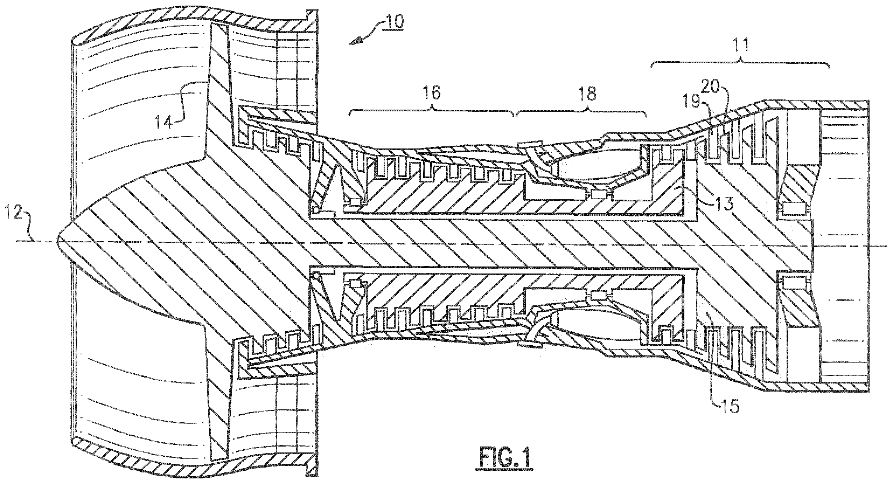

Figure 1 schematically illustrates a gas turbine engine 10 that includes a fan 14, a compressor section 16, a combustion section 18 and a turbine section 11, which are disposed about a central axis 12. As known in the art, air compressed in the compressor section 16 is mixed with fuel that is burned in combustion section 18 and expanded in the turbine section 11. The turbine section 11 includes, for example, rotors 13 and 15 that, in response to expansion of the burned fuel, rotate, and drive the compressor section 16 and fan 14.

The turbine section 11 includes alternating rows of blades 20 and static airfoils or vanes 19. It should be understood that Figure 1 is for illustrative purposes only and is in no way intended as a limitation on this disclosure or its application.

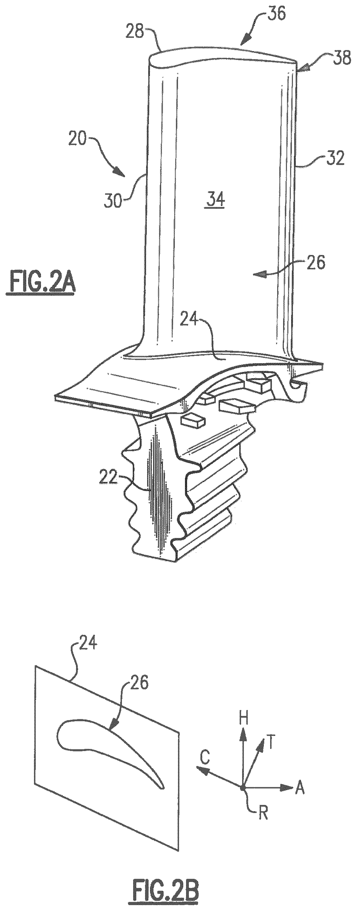

An example blade 20 is shown in Figure 2A. The blade 20 includes a platform 24 supported by a root 22, which is secured to a rotor, for example. An airfoil 26 extends radially outwardly from the platform 24 opposite the root 22 to a tip 28. While the airfoil 26 is disclosed as being part of a turbine blade 20, it should be understood that the disclosed airfoil may also be used as a vane.

Referring to Figure 2B, the airfoil 26 includes an exterior airfoil surface 38 extending in a chord-wise direction C from a leading edge 30 to a trailing edge 32. The airfoil 26 is provided between pressure and suction sides 34, 36 in an airfoil thickness direction T, which is generally perpendicular to the chord-wise direction C. Multiple airfoils 26 are arranged circumferentially in a circumferential direction H. The airfoil 26 extends from the platform 24 in a radial direction R to the tip 28. The exterior airfoil surface 38 may include multiple film cooling holes.

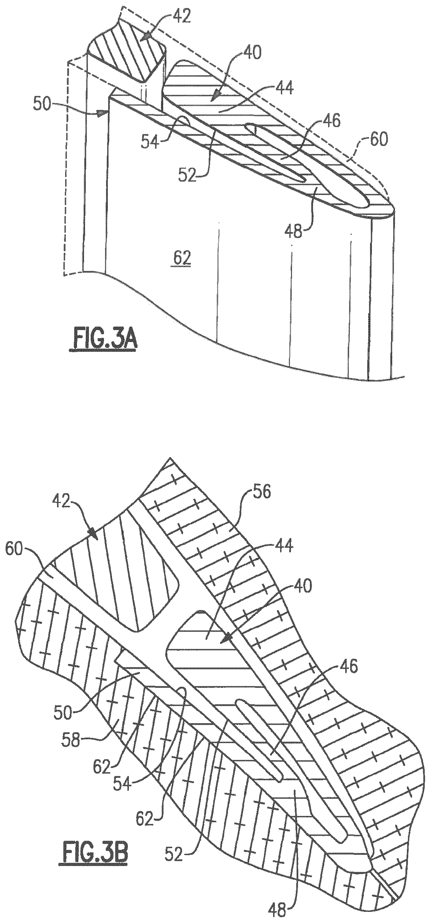

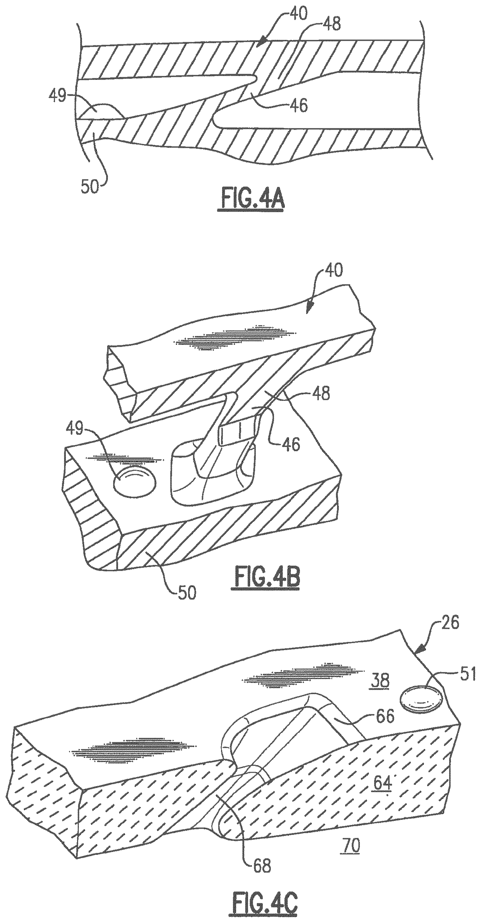

Referring to Figures 3A-4C, a core may be provided by first and second cores 40, 42, for example. The core 40 includes a body that has a cooling passage portion 44 with a film cooling passage portion 46 extending there from to a film cooling hole portion 48. The cooling passage portion 44 corresponds to an internal cooling passage 70 within the airfoil 26. The film cooling hole portion 48 corresponds to a film cooling hole 66 provide in the exterior airfoil surface 38.

The film cooling passage portion 46 corresponds to the film cooling passage 68 that feeds cooling fluid from the internal cooling passage 70 to the film cooling hole 66. Film cooling holes provided in this manner may be arranged in close proximity to one another near the trailing edge, for example, or any other desired location. For example, the film cooling holes 66 may be arranged in chord-wise and/or radial rows. Contour features, such as dimples and trenches, may also be provided on the exterior airfoil surface 38 by providing correspondingly shaped features on the outer surface 54 of the exterior airfoil portion 50.

An exterior airfoil portion 50 is integrally connected to the film cooling hole portion 48 and is spaced apart from the cooling passage portion 44 to provide a space surrounding the film cooling hole portion 48 that corresponds to an exterior airfoil wall 64. The cooling passage portion 44 includes an inner surface 52, and the exterior airfoil portion 50 includes an outer surface 54 and an exterior core surface 62 spaced apart from one another. The inner and outer surfaces 52, 54 face one another to provide the space corresponding to the cast wall 64. Fillets and chamfers may be provided where desired.

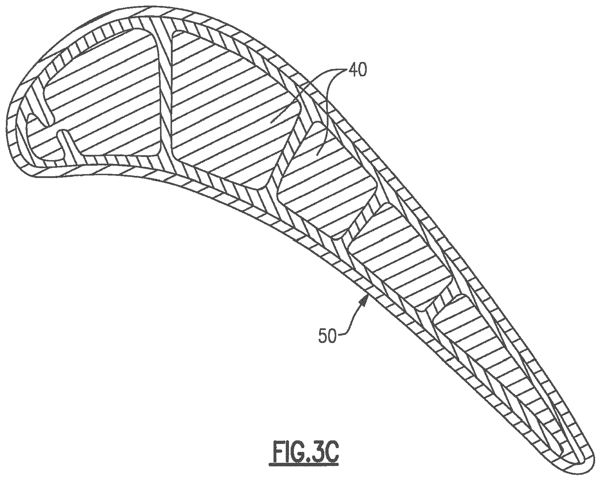

The cooling passage portion 44, the film cooling passage portion 46, the film cooling hole portion 48 and the exterior airfoil portion 50 provide a unitary body having uniform material properties. The unitary body includes a refractory metal, such as molybdenum, for example. Although the exterior airfoil portion 50 is illustrated as truncated, the exterior airfoil portion could wrap about the entire perimeter of the core thereby defining the entire airfoil exterior surface, as shown in Figure 3C. The first and second cores 40, 42 are placed into a wax mold having first and second mold portions 56, 58. Wax fills the voids between the first and second cores 40, 42 and the first and second mold portions 56, 58.

The exterior airfoil portion 50 may be used to provide surface contours or features on the airfoil 26, as shown in Figure 4A-4C. The exterior airfoil portion 50 may include a feature 49, which may protrude or recess relative to the exterior airfoil portion 50, may be used to provide a desired contour or corresponding feature 51 on the exterior airfoil surface 38.

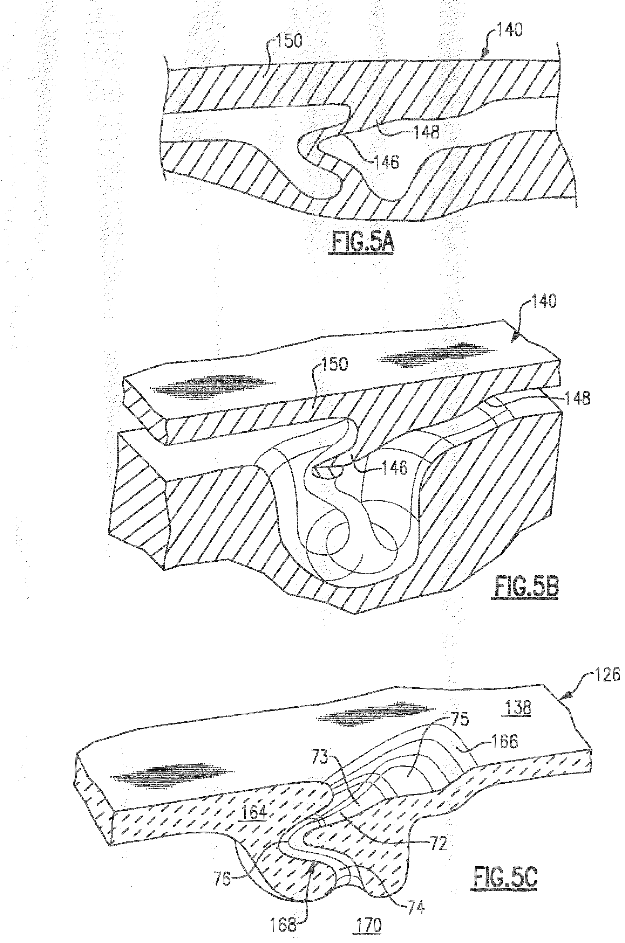

Another example core 140 and resulting airfoil 26 are shown in Figures 5A-5C. The film cooling passage portion 146 joins the film cooling hole portion 148 and the exterior airfoil portion 150. In the example, the film cooling hole portion 148 includes first and second passage portions 72, 74 joined to one another by a bend 76. The film cooling passage portion 146 corresponds to the film cooling passage 168 that feeds cooling fluid from the internal cooling passage 170 to the film cooling hole 166. An exterior airfoil portion 150 is integrally connected to the film cooling hole portion 148 and provides a space surrounding the film cooling hole portion 148 that corresponds to an exterior airfoil wall 164.

The film cooling configuration in Figures 5A-5C has multiple features which can be used with each other or individually. For example, the bulge into the exterior wall 164 can provide more structural integrity in the area surrounding the film cooling hole 166 which allows for a thinner wall elsewhere and allow the flow in the hole to develop due to its longer length. The film cooling passage 168 undulates to create a tortuous path for the air to flow through so that the speed of the cooling fluid is similar to the speed of the air in the gas path, which makes it more likely that the cooling fluid will attach to the airfoil. This tortuous path also increases the coolant side area relative to a linier hole this improving convective heat transfer. A diffusion exit 73 and a small trough 75 may also be provided to further maintain cooling air attachment. The diffusion exit expands from the interior cooling passage outward toward the exterior airfoil surface 138, which better cools and slows the air down. The trough 75 is a depression that maintains the air in the area for a greater duration to better cool the exterior wall 164.

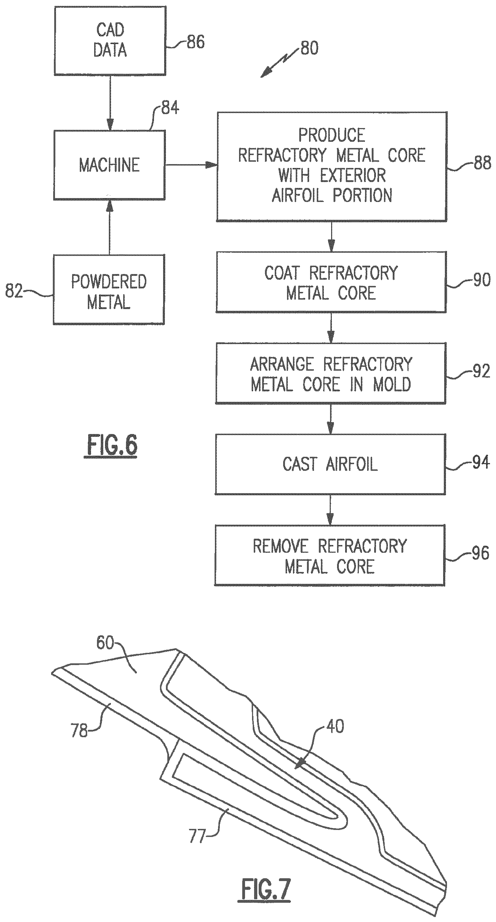

The airfoil geometries disclosed in Figures 3A-5C may be difficult to form using conventional casting technologies. Thus, an additive manufacturing process 80 may be used, as schematically illustrated in Figure 6.

To form the core, powdered metal 82 suitable for refractory metal core applications, such as molybdenum or tungsten, is fed to a machine 84, which may provide a vacuum, for example. The machine 84 deposits multiple layers of powdered metal onto one another. The layers are joined to one another with reference to CAD data 86, which relates to a particular cross-section of the core 40. In one example, the powdered metal 82 may be melted using a direct metal laser sintering process or an electron-beam melting process. With the layers built upon one another and joined to one another cross-section by cross-section, a core with the above-described geometries may be produced, as indicated at 88. A single piece core including both the first and second cores 40, 42 can be produced that requires no assembly and can be directly placed into the wax mold after being coated.

The coating 90 may be applied to the exterior surface of the core 40 which enables the core 40 to be more easily removed subsequently. The core 40 is coated with a metallic coating 77, shown in Figure 7, which prevents alloying of nickel and molybdenum. The core 40 is arranged in a multi-piece mold and held in a desired orientation by features on the mold, as indicated at 92. The core 40 is more robust and can better withstand handling as it is positioned within the mold.

The core 40 is enveloped in wax to provide a wax airfoil and core assembly with the exterior airfoil portion 50 proud of the wax airfoil 60, for example. The wax airfoil 60 is coated in a ceramic slurry to provide a ceramic airfoil mold 78, as shown in Figure 7. The ceramic airfoil mold 78 is bonded to the exterior airfoil portion 50. The wax is melted. The airfoil 26 is cast about the core 40, as indicated at 94. The ceramic airfoil mold 78 is filled with a nickel alloy, for example, to provide the airfoil 26. The core 40 is then removed from the airfoil 26, as indicated at 96, to provide desired cooling passage features. Hand finishing of the exterior airfoil surface 38 in the area of the film cooling holes is no longer required.

## Claims

1. A core (40; 140) for manufacturing an airfoil (26) for a gas turbine engine (10), the core (40; 140) comprising a body including a cooling passage portion (44) having a film cooling passage portion (46; 146) extending there from to a film cooling hole portion (48; 148), an exterior airfoil portion (50; 138) connected to the cooling hole portion (48; 148) and spaced apart from the cooling passage portion (44) providing a space surrounding the film cooling hole portion (48; 148) that corresponds to an exterior airfoil wall, wherein the film cooling passage portion (46), the cooling hole portion (48) and the exterior airfoil portion (50) provide a unitary body having uniform material properties, and the unitary body includes a refractory metal.

2. The core (40) according to claim 1, wherein the cooling passage portion (44) includes an inner surface (52), and the exterior airfoil portion (50) includes an outer surface (54) and an exterior core surface (62) spaced apart from one another, the inner and outer surfaces (52, 54) facing one another to provide the space.

3. The core (40) as claimed in claim 1, wherein the cooling passage portion (44) includes an inner surface (52), and the exterior airfoil portion (50) includes an outer surface (54) and an exterior core surface (62) spaced apart from one another, the inner and outer surfaces (52, 54) facing one another to provide the space, the outer surface (54) configured to provide a desired an exterior airfoil surface (38) contour.

4. The core (40) according to claim 2 or 3, wherein the exterior airfoil portion (50) wraps about an entire perimeter of the core (40) to provide an exterior airfoil surface (38).

5. The core (40) according to claim 2, wherein the exterior airfoil portion (50) includes contoured features configured to provide correspondingly-shaped contoured features on an airfoil exterior surface (38).

6. The core (140) according to claim 1, wherein the film cooling passage portion (146) includes:
first and second passage portions joined to one another by a bend; or
a diffusion exit.

7. The core (140) according to claim 1, wherein the cooling hole portion (148) includes a trough.

8. A method of manufacturing an airfoil (26) for a gas turbine engine (10), comprising the step of providing a core (40; 140) used to manufacture the airfoil (26), the core (40; 140) including a cooling passage portion (44) having a film cooling passage portion (46; 146) extending there from to a cooling hole portion (48; 148), an exterior airfoil portion (50; 138) connected to the film cooling hole portion (48; 148) and spaced apart from the cooling passage portion (44) providing a space surrounding the film cooling hole portion (48; 148) that corresponds to an exterior airfoil wall, wherein the film cooling passage portion (46), the cooling hole portion (48) and the exterior airfoil portion (50) provide a unitary body having uniform material properties, and the unitary body includes a refractory metal.

9. The method according to claim 8, comprising the steps of depositing multiple layers of powdered metal (82) onto one another, joining the layers to one another with reference to CAD data (86) relating to a particular cross-section of the core (40).

10. The method according to claim 8 or 9, comprising the step of coating the core (40) with a metallic coating (77).

11. The method according to claim 10, comprising the step of enveloping the coated core (40) in wax to provide a wax airfoil (60), the exterior airfoil portion (50) being proud of the wax airfoil (60).

12. The method according to claim 11, comprising the step of coating the wax airfoil (60) in a ceramic slurry to provide a ceramic airfoil mold (78), the ceramic airfoil mold (78) bonded to the exterior airfoil portion (50).

13. The method according to claim 12, comprising the steps of melting the wax and filling the ceramic airfoil mold (78) to produce an airfoil (26) including leading and trailing edges (30, 32) joined by spaced apart pressure and suction sides (34, 36) that provide an exterior airfoil surface (50), and optionally comprising the step of processing the airfoil (26) to provide desired structural characteristics.

## Patentansprüche

1. Kern (40; 140) zum Herstellen eines Schaufelprofils (26) für ein Gasturbinentriebwerk (10), wobei der Kern (40; 140) einen Körper umfasst, der einen Kühlkanalabschnitt (44) beinhaltet, der einen Filmkühlkanalabschnitt (46; 146) aufweist, der sich von dort zu einem Filmkühllochabschnitt (48; 148) erstreckt, einen äußeren Schaufelprofilabschnitt (50; 138), der mit dem Kühllochabschnitt (48; 148) verbunden ist und von dem Kühlkanalabschnitt (44) beabstandet ist, was einen Raum bereitstellt, der den Filmkühllochabschnitt (48; 148) umgibt, der einer äußeren Schaufelprofilwand entspricht, wobei der Filmkühlkanalabschnitt (46), der Kühllochabschnitt (48) und der äußere Schaufelprofilabschnitt (50) einen einheitlichen Körper bereitstellen, der gleichmäßige Materialeigenschaften aufweist, und der einheitliche Körper ein Refraktärmetall beinhaltet.

2. Kern (40) nach Anspruch 1, wobei der Kühlkanalabschnitt (44) eine Innenfläche (52) beinhaltet und der äußere Schaufelprofilabschnitt (50) eine Außenfläche (54) und eine äußere Kernfläche (62) beinhaltet, die voneinander beabstandet sind, wobei die Innen- und die Außenfläche (52, 54) einander zugewandt sind, um den Raum bereitzustellen.

3. Kern (40) nach Anspruch 1, wobei der Kühlkanalabschnitt (44) eine Innenfläche (52) beinhaltet und der äußere Schaufelprofilabschnitt (50) eine Außenfläche (54) und eine äußere Kernfläche (62) beinhaltet, die voneinander beabstandet sind, wobei die Innen- und die Außenfläche (52, 54) einander zugewandt sind, um den Raum bereitzustellen, wobei die Außenfläche (54) dazu konfiguriert ist, eine gewünschte Kontur einer äußeren Schaufelprofilfläche (38) bereitzustellen.

4. Kern (40) nach Anspruch 2 oder 3, wobei sich der äußere Schaufelprofilabschnitt (50) um einen gesamten Umfang des Kerns (40) wickelt, um eine äußere Schaufelprofilfläche (38) bereitzustellen.

5. Kern (40) nach Anspruch 2, wobei der äußere Schaufelprofilabschnitt (50) konturierte Merkmale beinhaltet, die dazu konfiguriert sind, entsprechend geformte konturierte Merkmale an einer äußeren Schaufelprofilfläche (38) zu bilden.

6. Kern (140) nach Anspruch 1, wobei der Filmkühlkanalabschnitt (146) Folgendes beinhaltet:
einen ersten und zweiten Kanalabschnitt, die durch eine Biegung miteinander verbunden sind; oder
einen Diffusionsausgang.

7. Kern (140) nach Anspruch 1, wobei der Kühllochabschnitt (148) eine Wanne beinhaltet.

8. Verfahren zum Herstellen eines Schaufelprofils (26) für ein Gasturbinentriebwerk (10), das den Schritt des Bereitstellens eines Kerns (40; 140) umfasst, der zum Herstellen des Schaufelprofils (26) verwendet wird, wobei der Kern (40; 140) einen Kühlkanalabschnitt (44) beinhaltet, der einen Filmkühlkanalabschnitt (46; 146) aufweist, der sich von dort zu einem Kühllochabschnitt (48; 148) erstreckt, einen äußeren Schaufelprofilabschnitt (50; 138), der mit dem Filmkühllochabschnitt (48; 148) verbunden ist und von dem Kühlkanalabschnitt (44) beabstandet ist, was einen Raum bereitstellt, der den Filmkühllochabschnitt (48; 148) umgibt, der einer äußeren Schaufelprofilwand entspricht, wobei der Filmkühlkanalabschnitt (46), der Kühllochabschnitt (48) und der äußere Schaufelprofilabschnitt (50) einen einheitlichen Körper bereitstellen, der gleichmäßige Materialeigenschaften aufweist, und der einheitliche Körper ein Refraktärmetall beinhaltet.

9. Verfahren nach Anspruch 8, das die Schritte des Abscheidens mehrerer Schichten Pulvermetalls (82) aufeinander, des Verbindens der Schichten aneinander in Bezug auf CAD-Daten (86), die sich auf einen bestimmten Querschnitt des Kerns (40) beziehen, umfasst.

10. Verfahren nach Anspruch 8 oder 9, das den Schritt des Beschichtens des Kerns (40) mit einer Metallbeschichtung (77) umfasst.

11. Verfahren nach Anspruch 10, das den Schritt des Umhüllens des beschichteten Kerns (40) in Wachs umfasst, um ein Wachsschaufelprofil (60) bereitzustellen, wobei der äußere Schaufelprofilabschnitt (50) von dem Wachsschaufelprofil (60) hervorsteht.

12. Verfahren nach Anspruch 11, das den Schritt des Beschichtens des Wachsschaufelprofils (60) mit einer Keramikaufschlämmung umfasst, um eine Keramikschaufelprofilform (78) bereitzustellen, wobei die Keramikschaufelprofilform (78) an den äußeren Schaufelprofilabschnitt (50) gebunden ist.

13. Verfahren nach Anspruch 12, das die Schritte des Schmelzens des Wachses und des Füllens der Keramikschaufelprofilform (78) umfasst, um ein Schaufelprofil (26) zu erzeugen, einschließlich Vorder- und Hinterkante (30, 32), die durch eine voneinander beabstandete Druck- und Ansaugseite (34, 36) verbunden sind, die eine äußere Schaufelprofilfläche (50) bereitstellen, und das wahlweise den Schritt des Verarbeitens des Schaufelprofils (26) umfasst, um gewünschte strukturelle Merkmale bereitzustellen.

## Revendications

1. Noyau (40 ; 140) pour la fabrication d'un profil aérodynamique (26) pour un moteur à turbine à gaz (10), le noyau (40 ; 140) comprenant un corps comportant une partie de passage de refroidissement (44) ayant une partie de passage de refroidissement de film (46 ; 146) s'étendant depuis celle-ci vers une partie d'orifice de refroidissement de film (48 ; 148), une partie de profil aérodynamique extérieure (50 ; 138) raccordée à la partie d'orifice de refroidissement (48 ; 148) et espacée de la partie de passage de refroidissement (44) créant un espace entourant la partie d'orifice de refroidissement de film (48 ; 148) qui correspond à une paroi de profil aérodynamique extérieure, dans lequel la partie de passage de refroidissement de film (46), la partie d'orifice de refroidissement (48) et la partie de profil aérodynamique extérieure (50) forment un corps ayant des propriétés de matériau uniformes, et le corps unitaire comporte un métal réfractaire.

2. Noyau (40) selon la revendication 1, dans lequel la partie de passage de refroidissement (44) comporte une surface intérieure (52) et la partie de profil aérodynamique extérieure (50) comporte une surface extérieure (54) et une surface de noyau extérieure (62) espacées l'une de l'autre, les surfaces intérieure et extérieure (52, 54) se faisant face pour créer l'espace.

3. Noyau (40) selon la revendication 1, dans lequel la partie de passage de refroidissement (44) comporte une surface intérieure (52) et la partie de profil aérodynamique extérieure (50) comporte une surface extérieure (54) et une surface de noyau extérieure (62) espacées l'une de l'autre, les surfaces intérieure et extérieure (52, 54) se faisant face pour créer l'espace, la surface extérieure (54) étant conçue pour fournir un contour de surface de profil aérodynamique extérieure (38) souhaité.

4. Noyau (40) selon la revendication 2 ou 3, dans lequel la partie de profil aérodynamique extérieure (50) s'enroule autour d'un périmètre entier du noyau (40) pour fournir une surface de profil aérodynamique extérieure (38).

5. Noyau (40) selon la revendication 2, dans lequel la partie de profil aérodynamique extérieure (50) comporte des éléments profilés conçus pour fournir des éléments profilés de forme correspondante sur une surface extérieure de profil aérodynamique (38).

6. Noyau (140) selon la revendication 1, dans lequel la partie de passage de refroidissement de film (146) comporte :
des première et seconde parties de passage reliées l'une à l'autre par un coude ; ou
une sortie de diffusion.

7. Noyau (140) selon la revendication 1, dans lequel la partie d'orifice de refroidissement (148) comporte un creux.

8. Procédé de fabrication d'un profil aérodynamique (26) pour un moteur à turbine à gaz (10), comprenant l'étape de fourniture d'un noyau (40 ; 140) utilisé pour fabriquer le profil aérodynamique (26), le noyau (40 ; 140) comportant une partie de passage de refroidissement (44) ayant une partie de passage de refroidissement de film (46 ; 146) s'étendant depuis celle-ci vers une partie d'orifice de refroidissement de film (48 ; 148), une partie de profil aérodynamique extérieure (50 ; 138) raccordée à la partie d'orifice de refroidissement de film (48 ; 148) et espacée de la partie de passage de refroidissement (44) créant un espace entourant la partie d'orifice de refroidissement de film (48 ; 148) qui correspond à une paroi de profil aérodynamique extérieure, dans lequel la partie de passage de refroidissement de film (46), la partie d'orifice de refroidissement (48) et la partie de profil aérodynamique extérieure (50) forment un corps unitaire ayant des propriétés de matériau uniformes, et le corps unitaire comporte un métal réfractaire.

9. Procédé selon la revendication 8, comprenant les étapes de dépôt de plusieurs couches de métal en poudre (82) les unes sur les autres, en reliant les couches les unes aux autres en référence à des données CAO (86) relatives à une section transversale particulière du noyau. (40).

10. Procédé selon la revendication 8 ou 9, comprenant l'étape de revêtement du noyau (40) avec un revêtement métallique (77).

11. Procédé selon la revendication 10, comprenant l'étape d'enveloppement du noyau revêtu (40) dans de la cire pour fournir un profil aérodynamique en cire (60), la partie de profil aérodynamique extérieure (50) dépassant du profil aérodynamique en cire (60).

12. Procédé selon la revendication 11, comprenant l'étape de revêtement du profil aérodynamique en cire (60) dans une suspension de céramique pour fournir un moule de profil aérodynamique en céramique (78), le moule de profil aérodynamique en céramique (78) étant lié à la partie de profil aérodynamique extérieure (50).

13. Procédé selon la revendication 12, comprenant les étapes de fusion de la cire et de remplissage du moule de profil aérodynamique en céramique (78) pour produire un profil aérodynamique (26) comportant des bords d'attaque et de fuite (30, 32) reliés par des intrados et extrados (34, 36) espacés qui fournissent une surface de profil aérodynamique extérieure (50), et comprenant éventuellement l'étape de traitement du profil aérodynamique (26) pour fournir des caractéristiques structurelles souhaitées.
